# EUROPÄISCHE PATENTSCHRIFT

(11) **EP 2 304 850 B1**
(45) Veröffentlichungstag und Bekanntmachung des Hinweises auf die Patenterteilung: **16.11.2011**
(21) Anmeldenummer: 09776458.3
(22) Anmeldetag: 20.03.2009
(51) Int. Cl.: H01R 13/03

(54) **ELEKTRISCHER LEITER FÜR ENERGIESPEICHER**
ELECTRICAL CONDUCTOR FOR ENERGY STORE
CONDUCTEUR ÉLECTRIQUE POUR ACCUMULATEUR D ÉNERGIE

(30) Priorität: 28.07.2008 DE 102008035169
(43) Veröffentlichungstag der Anmeldung: 06.04.2011
(73) Patentinhaber: Amphenol-Tuchel Electronics GmbH, 74080 Heilbronn (DE)
(72) Erfinder: LANGHOFF, Wolfgang, 71229 Leonberg (DE)
(74) Vertreter: Schweiger, Johannes
(86) Internationale Anmeldenummer: PCT/EP2009/002064
(87) Internationale Veröffentlichungsnummer: WO 2010/012322

(56) Entgegenhaltungen:
- DE-A1- 19 907 498
- DE-A1-102004 062 676
- US-A- 4 932 896
- US-A- 6 074 243

## Beschreibung

Die vorliegende Erfindung betrifft einen elektrischen Leiter zur parallelen und/oder seriellen Kontaktierung mehrerer Energiespeichereinheiten eines Energiespeichers mit entlang des elektrischen Leiters befestigten, zueinander beabstandeten Kontaktierungsanschlüssen zur Kontaktierung von Pluspolen und/oder Minuspolen der Energiespeichereinheiten sowie einen korrespondierenden Energiespeicher.

Dokument DE-A-102004062676 offenbart einen Leiher gemäß dem Oberbegriff des Anspruchs 1.

Solche Energiespeicher werden beispielsweise in Kraftfahrzeugen, insbesondere mit Elektro- oder Hybridantrieben eingesetzt. Die Energiespeicher bestehen üblicherweise aus mehreren Zellen, die elektrisch verbunden sind. Insbesondere für Hybridfahrzeuge müssen sehr viele Zellen sowohl parallel (zur Erhöhung der Kapazität) als auch seriell (zur Erhöhung der Spannung) verbunden werden. Bei der geforderten kompakten Bauart der Energiespeicher kommt es beim Betrieb des Energiespeichers zu erheblichen Temperaturschwankungen, zumal die Umgebungstemperatur bei Fahrzeugen ebenfalls erheblichen Schwankungen unterzogen ist.

Darüber hinaus besteht das technische Problem, dass auf Grund der hohen Ströme beträchtliche Leitungsquerschnitte vorgesehen werden müssen.

Ein weiteres technisches Problem stellen die beim Betrieb von Fahrzeugen auftretenden Vibrationen und Stöße dar.

Der Erfindung liegt daher die Aufgabe zu Grunde, einen elektrischen Leiter sowie einen korrespondierenden Energiespeicher anzugeben, mit welchen trotz der vorgenanten technischen Problemstellungen ein sicherer Betrieb bei optimaler Materialverwertung und darüber hinaus einfacher Montage mit geringstmöglicher Fehleranfälligkeit gewährleistet wird.

Diese Aufgabe wird mit den Merkmalen der Ansprüche 1 und 9 gelöst. Vorteilhafte Weiterbildungen der Erfindung sind in den Unteransprüchen angegeben. In den Rahmen der Erfindung fallen auch sämtliche Kombinationen aus zumindest zwei von in der Beschreibung, den Ansprüchen und/oder den Figuren angegebenen Merkmalen. Bei angegebenen Wertebereichen sollen auch innerhalb der genannten Grenzen liegende Werte als Grenzwerte offenbart gelten und in beliebiger Kombination beanspruchbar sein.

Der Erfindung liegt der Gedanke zu Grunde, ein flexibles Anschlusssystem beziehungsweise einen flexiblen elektrischen Leiter vorzusehen, mit dem Bauteiltoleranzen ausgeglichen und Längenänderungen durch Temperaturschwankungen kompensiert werden können, was durch flexible Abschnitte zwischen den Kontaktierungsanschlüssen umgesetzt werden kann. Vorzugsweise sind die Abschnitte daher ausschließlich aus flexiblem Material gefertigt und weisen keine starren Bestandteile auf. Die flexiblen Abschnitte sind dabei mit Vorteil länger als die Abschnitte der Kontaktierungsanschlüsse, insbesondere mindestens zweimal, vorzugsweise fünfmal so lang.

In einer vorteilhaften Ausgestaltung der Erfindung sind die Energiespeichereinheiten als Akkuzellen und der Energiespeicher als Akkublock ausgebildet.

In einer weiteren Ausgestaltung der Erfindung sind die Kontaktierungsanschlüsse als Kontaktierungsplättchen ausgestaltet.

Indem der elektrische Leiter als, insbesondere unisolierte, Litze ausgebildet ist, ist einerseits ein großer Querschnitt realisierbar und im Bereich der flexiblen Abschnitte die Flexibilität durch die leicht zu biegende Litze gewährleistet. Der Verzicht auf eine Ummantelung wird eine größstmögliche Flexibilität erhalten.

Mit Vorteil weisen die Kontaktierungsanschlüsse, insbesondere bei Parallelschaltungen, einen geringeren Leitungsquerschnitt auf als der elektrische Leiter, wodurch der Bauraum im Bereich der Zellanschlüsse so gering wie möglich gehalten werden kann.

Soweit die Kontaktierungsanschlüsse zum Anschluss an die Pluspole aus einem anderen Material, insbesondere Aluminium, als das Material, insbesondere Kupfer oder vernickelter Stahl, der Kontaktierungsanschlüsse zum Anschluss an die Minuspole gebildet sind, wird einerseits eine qualitativ hochwertige Kontaktierung erreicht und wegen der geringstmöglichen Korrosionsprobleme bei der Kombination von Metallen mit ungleichen elektrochemischen Spannungspotenzial eine Langlebigkeit der Kontaktierungsanschlüsse gewährleistet. Mit Vorteil sind die Kontaktierungsplättchen aus walzplattiertem Band gefertigt. Besonders bevorzugt ist eine Ausführungsform, bei der die Kontaktierungsanschlüsse an die Pluspole und/oder die Minuspole anschweißbar sind.

Die Kontaktierungsanschlüsse weisen eine Pluspolanschlussseite und eine Minuspolschlussseite auf, wobei die Pluspolanschlussseite aus einem anderen Material, insbesondere Aluminium, als das Material, insbesondere Kupfer, der Minuspolanschlussseite gebildet ist. Auf diese Weise ist lediglich eine Art von Kontaktierungsanschlüssen zu fertigten, was sich positiv auf die Produktionskosten der Kontaktierungsanschlüsse auswirkt.

Durch die technische Maßnahme, dass die Kontaktierungsanschlüsse durch Fügestellen in Form von Kraftschlussverbindungen, insbesondere Schweiß- oder Crimpverbindungen an dem elektrischen Leiter beziehungsweise einer Litze befestigt sind, ist eine selbst bei starken Vibrationen oder Stößen sichere Verbindung zwischen dem elektrischen Leiter und den Kontaktierungsanschlüssen gewährleistet. Soweit gleichzeitig eine materialschlüssige Anbindung der Kontaktierungsanschlüsse an Pluspol und/oder Minuspol der Energiespeichereinheiten erfolgt, vorzugsweise durch Schweißen, ist auch hier eine Störung durch Trennen der elektrischen Verbindung praktisch ausgeschlossen. Als besonders wirksame Schweißtechnologie wird im vorliegenden Anwendungsfall das Laser- oder Ultraschallschweißen angesehen, wobei vorzugsweise der übergang auf die Energiespeichereinheiten durch Laserschweißen und der Kontaktierungsanschtüsse auf die Leitung, insbesondere Litze, durch Ultraschallschweißen erfolgt. Hierdurch wird eine homogene Verbindung mit minimalen oder geringstmöglichen Übergangswiderstand geschaffen.

Mit Vorteil ist an einer der Fügestellen ein Zellspannungsabgriffleiter vorgesehen, vorzugsweise mit angeschweißt, um bei einem Ladevorgang und beim Betrieb sichere und störungsfreie Informationen über den Zustand jeder Energiespeichereinheit zu erhalten.

Weitere Vorteile, Merkmale und Einzelheiten der Erfindung ergeben sich aus der Beschreibung bevorzugter Ausführungsbeispiele sowie an Hand der Zeichnungen. Diese zeigen in:
- Fig. 1:: eine perspektivische Ansicht eines Ausschnitts eines erfindungsgemäßen elektrischen Leiters, und
- Fig. 2:: eine perspektivische Ansicht eines Ausschnitts eines erfindungsgemäßen Energiespeichers.

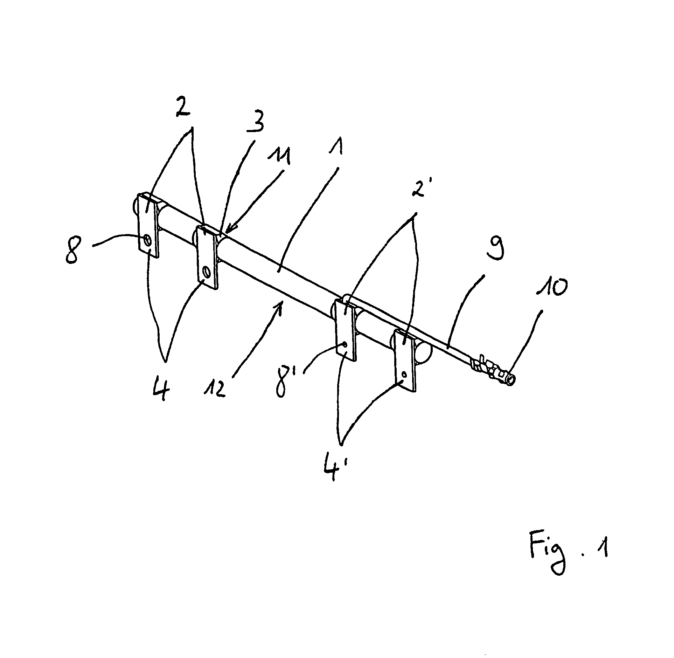

Figur 1 zeigt einen Ausschnitt eines erfindungsgemäßen elektrischen Leiters, bestehen aus einer Litze 1, die aus dünnen Einzeldrähten besteht und daher ein leicht zu biegender elektrischer Leiter ist. Weder die Einzeldrähte der Litze 1 (bis mehrere tausend) noch die Litze 1 als solche sind von einer Isolierhülle umschlossen, sondern werden unisoliert verlegt.

Entlang der Litze 1 sind Kontaktierungsplättchen 2, 2' durch Fügestellen 3 angefügt, wodurch ein permanenter und inniger elektrischer Kontakt zwischen den Kontaktierungsplättchen 2, 2' und der Litze 1 hergestellt ist.

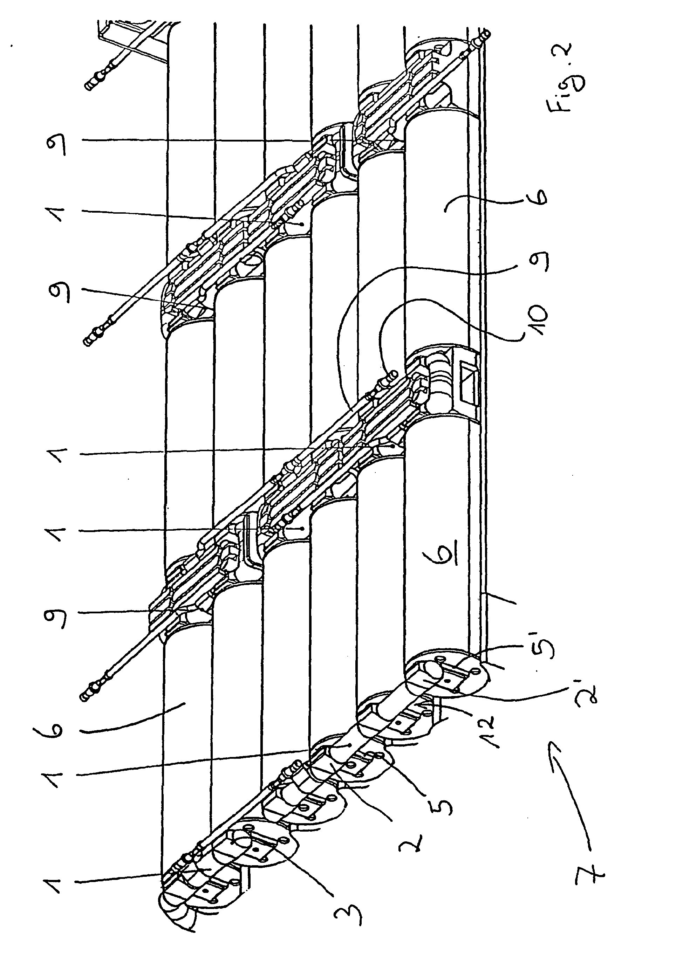

Die Kontaktierungsplättchen 2, 2' werden über Befestigungsabschnitte 4, 4' an in Figur 2 dargestellte Pole 5, 5' von Akkuzellen 6 des Akkublocks 7 elektrisch angeschlossen, und zwar durch Anschweißen.

Zur Kenntlichmachung der Polung der Pole 5, 5' und entsprechend richtigem Anschluss der Kontaktierungsplättchen 2, 2' an Pluspol 5' und Minuspol 5 sind Kennzeichnungsmittel 8, 8', insbesondere in Form von Löchern unterschiedlichen Durchmessers, an den Befestigungsabschnitten 4, 4' vorgesehen.

Durch an die Litze 1 angefügten Zellspannungsabgriffleiter 9 ist die Zellspannung jeder Gruppe von Zellen 6, die durch eine Litze 1 verbunden sind, abgreifbar, wodurch eine individuelle Auswertung der Gruppen von Akkuzellen 6 möglich ist. Der Anschluss des Zellspannungsabgriffleiters 9 erfolgt mit Vorteil durch einen Anschluss 10, der vorzugsweise als RADSOK-Stecker ausgebildet ist.

Zwischen den Kontaktierungsabschnitten 11 beziehungsweise den Fügestellen 3 sind flexible Abschnitte 12 vorgesehen, die hier durch die Litze 1 selbst gebildet werden, da die Ausgestaltung als Litze 1 und ohne die Vorkompaktierung der Litze in den flexiblen Bereichen 12 die Flexibilität der flexiblen Bereiche 12 sicher stellt, so dass ein Toleranzausgleich in alle Richtungen des Koordinatensystems, auch entlang der Litze 1, möglich ist.

Eine für die Montage besonders vorteilhafte und Platz sparende Unterbringung des elektrischen Leiters im Energiespeicher wird durch die Ausgestaltung der Kontaktierungsplättchen 2, 2' als rechteckige Plättchen mit die Litze 1 überragenden Befestigungsabschnitten 4, 4' verwirklicht.

Die Befestigungsabschnitte 4, die an den Minuspolen 5 angeschweißt werden, sind mit Vorteil aus Kupfer oder vernickeltem Stahl gebildet, während die Befestigungsabschnitte 4', die an den Pluspolen 5' der Akkuzellen 6 angeschweißt werden, mit Vorteil aus Aluminium gebildet sind, da mit die Minuspole 5 und die Pluspole 5' der Akkuzellen 6 aus hierzu korrespondierenden Materialien bestehen.

Der Anschluss des Energiespeichers gemäß Figur 2 kann mit Vorteil ebenfalls durch RADSOK-Stecker/-Buchse erfolgen.

Alternativ können die Kontaktierungsplättchen 2, 2' mit einer Pluspolanschlussseite und einer gegenüberliegend angeordneten Minuspolanschlussseite gebildet sein.

### Elektrischer Leiter für Energiespeicher

### Bezugszeichenliste

- 1: Litze
- 2, 2': Kontaktierungsplättchen
- 3: Fügestellen
- 4, 4': Befestigungsabschnitte
- 5, 5': Pole (Minuspol, Pluspol)
- 6: Akkuzellen
- 7: Akkublock
- 8, 8': Kennzeichnungsmittel
- 9: Zellspannungsabgriffleiter
- 10: Anschluss
- 11: Kontaktierungsabschnitt
- 12: flexibler Abschnitt

## Patentansprüche

1. Elektrischer Leiter zur parallelen und/oder seriellen Kontaktierung mehrerer Energiespeichereinheiten (6) eines Energiespeichers mit entlang des elektrischen Leiters befestigten, zueinander beabstandeten Kontaktierungsanschlüssen (2, 2') zur Kontaktierung von Pluspolen (5') und/oder Minuspolen (5) der Energiespeichereinheiten (6), wobei zwischen den Kontaktierungsanschlüssen (2, 2') flexible Abschnitte (12) vorgesehen sind,
**dadurch gekennzeichnet, dass**
jeder Kontaktierungsanschluß eine Pluspolanschlussseito und eine
Minuspolanschlussseite aufweist, wobei die Pluspolanschlussseite aus einem anderen Material als das Material der Minuspolanschlussseite gebildet ist.

2. Elektrischer Leiter nach Anspruch 1, bei dem die Energiespeichereinheiten (6) als Akkuzellen (6) und der Energiespeicher als Akkublock (7) ausgebildet sind.

3. Elektrischer Leiter nach einem der vorherigen Ansprüche, bei dem die Kontaktierungsanschlüsse als Kontaktierungsplättchen (2, 2') ausgestaltet sind.

4. Elektrischer Leiter nach einem der vorherigen Ansprüche, wobei der elektrische Leiter als, insbesondere unisolierte, Litze (1) ausgebildet ist.

5. Elektrischer Leiter nach einem der vorherigen Ansprüche, bei dem die Kontaktierungsanschlüsse (2, 2') einen geringeren Leitungsquerschnitt aufweisen als die Litze (1).

6. Elektrischer Leiter nach einem der vorherigen Ansprüche, bei dem die Pluspolanschlussseite aus Aluminium und die Minuspolanschlussseite aus Kupfer gebildet ist.

7. Elektrischer Leiter nach einem der vorherigen Ansprüche, bei dem die Kontaktierungsanschlüsse (2, 2') durch Fügestellen (3) befestigt sind.

8. Elektrischer Leiter nach Anspruch 7, bei dem an einer der Fügestellen (3) ein Zellspannungsabgriffleiter (9) vorgesehen ist.

9. Energiespeicher, insbesondere für Hybridfahrzeuge, bestehend aus mehreren Energiespeichereinheiten, wobei die Energiespeichereinheiten durch elektrische Leiter nach einem der vorhergehenden Ansprüche parallel und/oder seriell miteinander elektrisch verbunden sind.

## Claims

1. Electrical conductor for making parallel and/or serial contact with several energy storage units (6) of an energy store with contact connections (2, 2') which are spaced apart from one another and which are attached along the electrical conductor for making contact with the positive poles (5') and/or negative poles (5) of the energy storage units (6), flexible sections (12) being provided between the contact-making connections (2, 2'), **characterized in that** each contact-making connection has a positive pole connection side and a negative pole connection side, the positive pole connection side being formed from a material other than the material of the negative pole connection side.

2. Electrical conductor as claimed in claim 1, wherein the energy storage units (6) are made as battery cells (6) and the energy store is made as a battery block (7).

3. Electrical conductor as claimed in one of the previous claims, wherein the contact-making connections are made as small contact-making plates (2, 2').

4. Electrical conductor as claimed in one of the previous claims, wherein the electrical conductor is made as an especially uninsulated litz wire (1).

5. Electrical conductor as claimed in one of the previous claims, wherein the contact-making connections (2, 2') have a smaller line cross section than the litz wire (1).

6. Electrical conductor as claimed in one of the previous claims, wherein the positive pole connection side is formed from aluminum and the negative pole connection side is formed from copper.

7. Electrical conductor as claimed in one of the previous claims, wherein the contact-making connections (2, 2') are attached by joining sites (3).

8. Electrical conductor as in claim 7, wherein there is a cell voltage tap conductor (9) at one of the joining sites (3).

9. Energy store, especially for hybrid vehicles, consisting of several energy storage units, the energy storage units being electrically connected to one another in parallel and/or in series by electrical conductors according to one of the preceding claims.

## Revendications

1. Conducteur électrique pour la mise en contact parallèle et/ou série de plusieurs unités de stockage d'énergie (6) d'un accumulateur d'énergie avec des branchements de mise en contact (2, 2') fixés le long du conducteur électrique et espacés les uns des autres pour la mise en contact de pôles positifs (5') et/ou de pôles négatifs (5) des unités de stockage d'énergie (6), des parties (12) flexibles étant prévues entre les branchements de mise en contact (2, 2'),
**caractérisé en ce que**
chaque branchement de mise en contact présente un côté branchement de pôle positif et un côté branchement de pôle négatif, le côté branchement de pôle positif étant formé dans un matériau autre que le matériau du côté branchement de pôle négatif.

2. Conducteur électrique selon la revendication 1, dans lequel les unités de stockage d'énergie (6) sont conçues comme des cellules d'accumulateur (6) et l'accumulateur d'énergie comme bloc accu (7).

3. Conducteur électrique selon l'une des revendications précédentes, dans lequel les branchements de mise en contact sont conçus comme des plaquettes de mise en contact (2, 2').

4. Conducteur électrique selon l'une des revendications précédentes, le conducteur électrique étant conçu comme toron (1) en particulier non isolé.

5. Conducteur électrique selon l'une des revendications précédentes, dans lequel les branchements de mise en contact (2, 2') présentent une section de ligne plus faible que le toron (1).

6. Conducteur électrique selon l'une des revendications précédentes, dans lequel le côté branchement de pôle positif est formé à base d'aluminium et le côté branchement de pôle négatif à base de cuivre.

7. Conducteur électrique selon l'une des revendications précédentes, dans lequel les branchements de mise en contact (2, 2') sont fixés par des points d'assemblage (3).

8. Conducteur électrique selon la revendication 7, dans lequel un conducteur de prise de tension d'élément (9) est prévu sur l'un des points d'assemblage (3).

9. Accumulateur d'énergie, en particulier pour des véhicules hybrides, comprenant plusieurs unités de stockage d'énergie, les unités de stockages d'énergie étant reliées électriquement les unes aux autres en parallèle et/ou en série par des conducteurs électriques selon l'une des revendications précédentes.
